# EUROPEAN PATENT APPLICATION

(11) **EP 3 351 976 A1**
(43) Date of publication of application: **25.07.2018**
(21) Application number: 16845922.0
(22) Date of filing: 07.09.2016
(51) Int. Cl.: G01V 8/14, G08B 21/02

(54) **INFRARED DETECTION DEVICE**

(30) Priority: 18.09.2015 JP 2015185736
(71) Applicant: Panasonic Intellectual Property Management Co., Ltd., Osaka-shi, Osaka 540-6207 (JP)
(72) Inventor: YOKOTA, Hirosi, Osaka 540-6207 (JP); HARANO, Yoshihiko, Osaka 540-6207 (JP); HASIMOTO, Yuusuke, Osaka 540-6207 (JP)
(74) Representative: Appelt, Christian W.
(86) International application number: PCT/JP2016/004068
(87) International publication number: WO 2017/047047

(57) **Abstract**

It is an object of the present invention to realize an infrared detection device which is less prone to a false detection of an object. An infrared detection device (C1) includes an infrared sensor (32) and a mirror (4). The infrared sensor (32) is configured to receive infrared rays. The mirror (4) is configured to concentrate the infrared rays on a light receiving surface (32a) of the infrared sensor (32). The mirror (4) includes a plurality of reflector mirrors (4a to 4h) and a mounting platform (41). The plurality of reflector mirrors (4a to 4h) define respective detection range different from each other. The plurality of reflector mirrors (4a to 4h) are disposed on the mounting platform (41). The mounting platform (41) includes a separator (41a) separating adjacent ones of the plurality of reflector mirrors (4a to 4h).

## Description

### Technical Field

The present invention relates to an infrared detection device.

### Background Art

An infrared detection device configured to detect an object is known. For example, Patent Literature 1 discloses such an infrared detection device. The human body detecting infrared device (infrared detection device) described in Patent Literature 1 includes a composite concave mirror and an infrared sensor, and the composite concave mirror is formed by compositing a plurality of divided mirrors (reflector mirrors) obtained by dividing a concave mirror. An output of the infrared sensor is input to a human body detecting circuit. The human body detecting circuit determines the presence or absence of a human body in a detection area corresponding to incident light concentrated by the composite concave mirror.

In the above example, infrared rays entering the vicinity of the interface between the divided mirrors adjacent to each other, however, may cause a false detection of a human body (object).

### Citation List

### Patent Literature

Patent Literature 1: JP S60-47977 A

### Summary of Invention

In view of the foregoing, it is an object of the present invention to realize an infrared detection device which is less prone to false detection of an object.

An infrared detection device according to an aspect of the present invention includes an infrared sensor and a mirror. The infrared sensor is configured to receive infrared rays. The mirror is configured to concentrate the infrared rays on a light receiving surface of the infrared sensor. The mirror includes a plurality of reflector mirrors and a mounting platform. The plurality of reflector mirrors define respective detection ranges different from each other. The plurality of reflector mirrors are disposed on the mounting platform. The mounting platform includes a separator separating adjacent ones of the plurality of reflector mirrors.

### Brief Description of Drawings

FIG. 1 is a perspective view illustrating an infrared detection device of an embodiment of the present invention;
FIG. 2 is a partial sectional perspective view illustrating a mounting platform of the infrared detection device of the embodiment;
FIG. 3 is a view specifically illustrating detection ranges of the infrared detection device of the embodiment;
FIG. 4 is an exploded perspective view illustrating an electrical appliance of the embodiment;
FIG. 5 is a front view illustrating the electrical appliance of the embodiment;
FIG. 6 is a sectional view taken along line X1-X2 of FIG. 5;
FIG. 7 is a sectional view taken along line X3-X4 of FIG. 5;
FIG. 8 is a front perspective view illustrating the electrical appliance and a holder member of the embodiment; and
FIG. 9 is a rear perspective view illustrating the electrical appliance and the holder member of the embodiment.

### Description of Embodiments

The present embodiment relates to infrared detection devices C1. More specifically, the present embodiment relates to an infrared detection device C1 configured to detect an object.

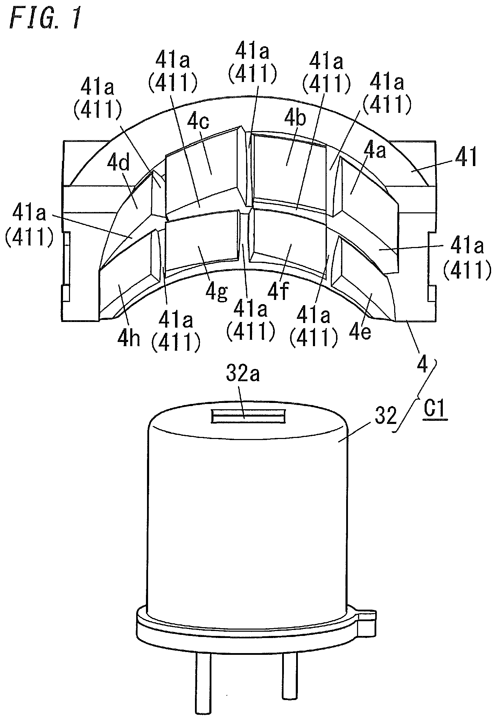

As illustrated in FIGS. 1 to 3, the infrared detection device C1 of the present embodiment includes an infrared sensor 32 and a mirror 4. The infrared sensor 32 is configured to receive infrared rays. The mirror 4 is configured to concentrate the infrared rays on a light receiving surface 32a of the infrared sensor 32.

The mirror 4 includes a plurality of reflector mirrors 4a to 4h and a mounting platform 41. The plurality of reflector mirrors 4a to 4h respectively define detection ranges R1 to R8 different from each other. The plurality of reflector mirrors 4a to 4h are disposed on the mounting platform 41. The mounting platform 41 includes separators 41a separating adjacent ones of the plurality of reflector mirrors 4a to 4h.

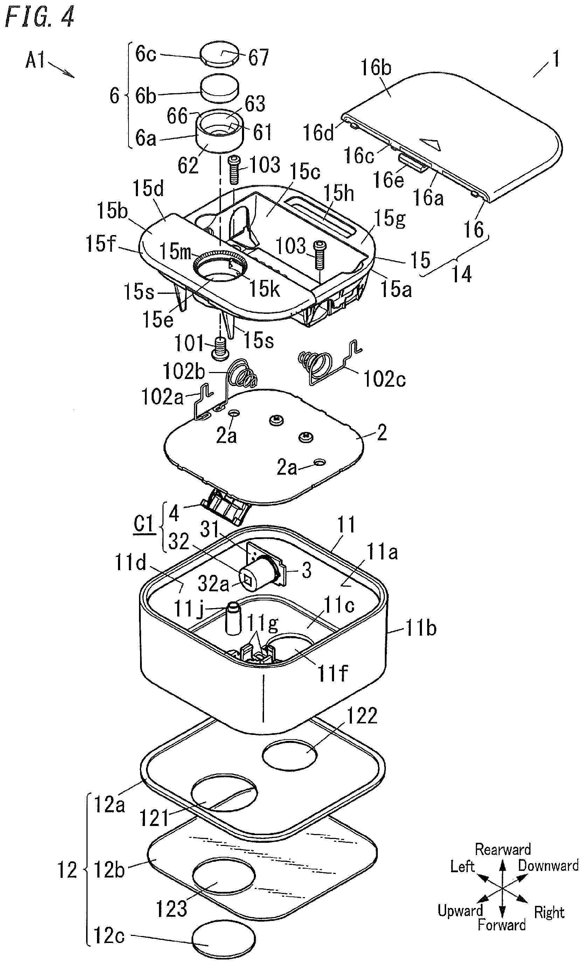

The infrared detection device C1 of the present embodiment and an electrical appliance A1 including the infrared detection device C1 will be described in detail below. Note that the configuration described below is a mere example of the present invention. The present invention is not limited to the following embodiment. Embodiments other than the following embodiment may be accordingly modified depending on design and the like within the scope of the technical idea of the present invention. Note that in the following description, the upward and downward direction, the right and left direction, and the forward and rearward direction are defined as indicated by the arrows in FIG. 4. The arrows in FIG. 4 indicate directions and have no entity.

First, the electrical appliance A1 of the present embodiment will be described in detail. As illustrated in FIG. 4, the electrical appliance A1 of the present embodiment includes a housing 1 having a rectangular box shape. The electrical appliance A1 includes a substrate 2, a sensor unit 3, a mirror 4, and a magnet unit 6 which are accommodated in the housing 1. On the substrate 2, an imaging unit 5, a control circuit, a wireless communication circuit, an antenna, and the like are mounted. The electrical appliance A1 of the present embodiment operates with power supplied from a battery.

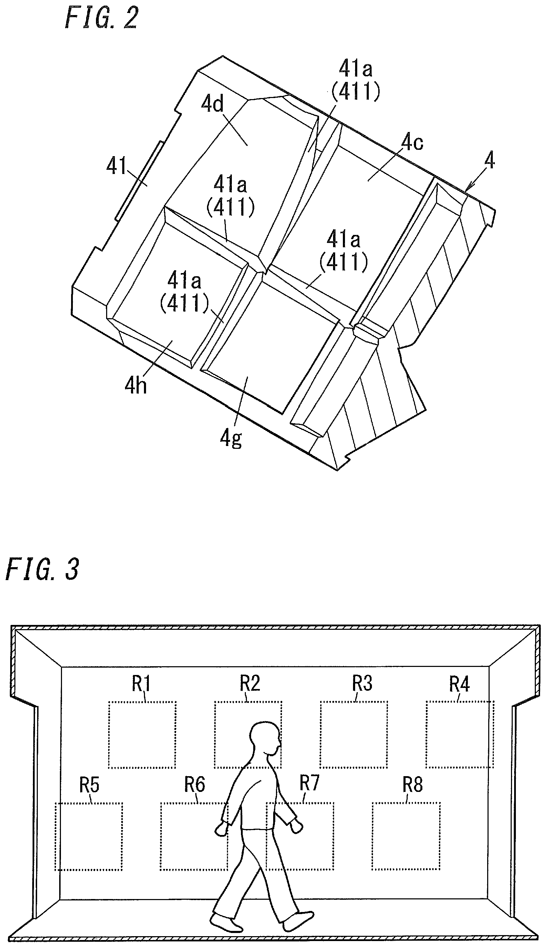

The electrical appliance A1 of the present embodiment detects an object (a person 201 (see FIG. 3) in the present embodiment) by the sensor unit 3 and captures an image by the imaging unit 5. The electrical appliance A1 of the present embodiment has a function of transmitting image data of an image captured by the imaging unit 5 by a wireless signal via the antenna.

The electrical appliance A1 is used for care service for, for example, elderly people and/or children. The electrical appliance A1 is installed in a residence or a room of an elderly person or a child, and data of a captured image to a smartphone, mobile phone, tablet terminal, or personal computer of the family of the elderly person or the child or to a server managed by a business operator of the care service. In this way, the family or the business operator of the care service can grasp activities and/or conditions of the elderly person or the child.

Note that the specification of wireless communication used by the electrical appliance A1 of the present embodiment may be accordingly selected from a wireless local area network (LAN), Bluetooth (registered trademark), and the like. The specification of the wireless communication is not limited.

With reference to FIGS. 4 to 7, components of the electrical appliance A1 of the present embodiment will be described below.

As illustrated in FIG. 4, the housing 1 includes a case body 11, a front surface cover 12, and a rear surface cover 14 which are combined with each other.

The case body 11 is formed by two-color molding. Specifically, the case body 11 has a core member 11a made of polycarbonate and an elastic member 11b made of polyester-based elastomer and covering a part of an outer surface of the core member 11a. The core member 11a includes a front wall 11c and a sidewall 11d. The front wall 11c has a rectangular shape. The sidewall 11d extends rearward from an outer periphery of the front wall 11c. The core member 11a has the shape of a rectangular box with a rear surface opening. The sidewall 11d has an outer surface covered with the elastic member 11b. The elastic member 11b has a rear end located beyond the rear end of the sidewall 11d in the rearward direction. That is, the rear surface opening of the case body 11 has a peripheral edge on an inner side of which the rear end of the core member 11a is located and on an outer side of which the rear end of the elastic member 11b is located, wherein the rear end of the elastic member 11b extends beyond the rear end of the core member 11a, thereby forming a step.

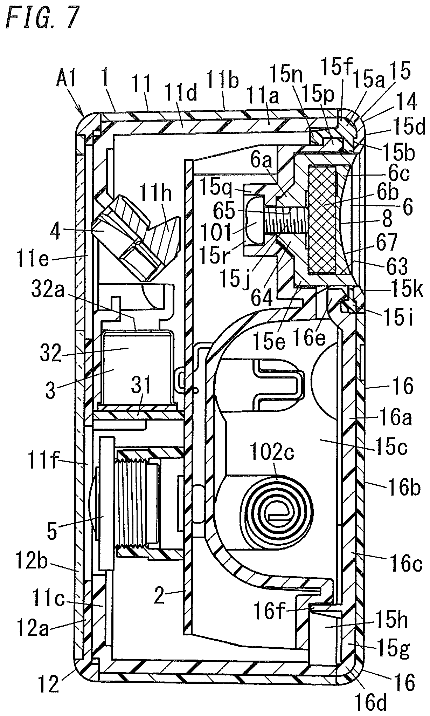

Moreover, the front wall 11c of the core member 11a has an upper part in which an opening 11e (see FIG. 7) having a circular shape is formed, and the front wall 11c has a lower part in which an opening 11f having a circular shape is formed. The front surface cover 12 is attached to the front wall 11c of the core member 11a.

The front surface cover 12 includes a cover body 12a, a light transmissive cover 12b, and an infrared filter 12c. The cover body 12a has a rectangular plate shape. The cover body 12a is attached to the front surface of the case body 11 with the rear surface of the cover body 12a facing the front wall 11c. The cover body 12a has openings 121 and 122 which are circular and respectively face the openings 11e and 11f of the core member 11a. The light transmissive cover 12b is light transmissive. The light transmissive cover 12b has an opening 123 having a circular shape and facing the opening 121. The light transmissive cover 12b is attached to the front surface of the cover body 12a. The infrared filter 12c having a disk shape is fitted in the opening 123. The infrared filter 12c is made of, for example, polyethylene which allows infrared rays to pass through. The infrared filter 12c allows only light in the wavelength band of the infrared rays to pass through.

The rear surface cover 14 is attached to the rear surface of the case body 11. The rear surface cover 14 includes a cover body 15 and a battery cover 16 which are combined with each other. The cover body 15 has a rectangular box shape.

The cover body 15 is formed by two-color molding. Specifically, the cover body 15 includes a core member 15a made of polycarbonate and an elastic member 15b made of polyester-based elastomer and covering a part of an outer surface of the core member 15a. The core member 15a has the shape of a rectangular box having a battery accommodation section 15c. The battery accommodation section 15c is a recess having the shape of a rectangular parallelepiped. Moreover, an extended part 15d having a flat plate shape is located on an upper side of the battery accommodation section 15c. The extended part 15d has a magnet accommodation section 15e which is a cylindrical recess. The extended part 15d has an upper end including a locking piece 15n (see FIG. 7) which is formed forward to have an L shape. The magnet accommodation section 15e has an outer periphery including a locking pawl 15p (see FIG. 7) engaging with the locking piece 15n.

The extended part 15d has the upper end and both right and left ends from which a peripheral wall 15f having a curved surface extends forward. The rear surface of the extended part 15d and the outer surface of the peripheral wall 15f are covered with the elastic member 15b. The elastic member 15b has a front end extending forward beyond the front end of the peripheral wall 15f. That is, the extended part 15d has an upper peripheral edge and both right and left peripheral edges on an inner side of which the front end of the core member 15a is located and on an outer side of which the front end of the elastic member 15b is located, wherein the front end of the elastic member 15b extends beyond the front end of the core member 15a, thereby forming a step. On the lower side of the battery accommodation section 15c, an extended part 15g having a flat plate shape is provided. The extended part 15g has a recess 15h having the shape of a rectangular parallelepiped.

Moreover, the battery cover 16 is also formed by two-color molding. Specifically, the battery cover 16 includes a core member 16a made of polycarbonate and an elastic member 16b made of polyester-based elastomer and covering a part of an outer surface of the core member 16a. The core member 16a has a rectangular plate shape including a rear wall 16c which is rectangular and a peripheral wall 16d extending forward from the lower end and both the right and left ends of the rear wall 16c. The rear surface of the rear wall 16c and the outer surface of the peripheral wall 16d are covered with the elastic member 16b. The elastic member 16b has a front end extending forward beyond the front end of the peripheral wall 16d. That is, the battery cover 16 has a lower peripheral edge and both right and left peripheral edges on an inner side of which the front end of the core member 16a is located and on an outer side of which the front end of the elastic member 16b is located, wherein the front end of the elastic member 16b extends beyond the front end of the core member 16a, thereby forming a step.

The battery cover 16 is attached to the cover body 15 to cover the battery accommodation section 15c. That is, the battery cover 16 is slid from the bottom to the top with the battery cover 16 facing the battery accommodation section 15c. In this way, a locking piece 16e having an L shape and disposed at the center of the upper end of the battery cover 16 is locked by a locking pawl 15i (see FIG. 7) provided at a lower end of the extended part 15d, thereby attaching the battery cover 16 to the cover body 15. Moreover, the rear wall 16c of the battery cover 16 has a front surface including a wall housing 16f (see FIG. 7) having a plate-like shape along the right and left direction. To attach the battery cover 16 to the cover body 15, the wall housing 16f is fitted into a recess 15h (see FIG. 7).

Alternatively, an area around the center of the upper end of the battery cover 16 is pushed by a finger or the like to release the locking piece 16e from the locking pawl 15i, and then, the battery cover 16 is slid downward, which enables the battery cover 16 to be detached from the cover body 15.

The battery accommodation section 15c is a space in which a battery is to be accommodated. At one end in the longitudinal direction of the battery accommodation section 15c, electrode springs 102a and 102b which are to come into contact with electrodes of batteries are located, and at the other end in the longitudinal direction of the battery accommodation section 15c, an electrode spring 102c which is to come into contact with electrodes of the batteries is located. In the electrical appliance A1 of the present embodiment, two AA batteries are used, but D batteries, C batteries, AAA batteries, or the like may be used. Alternatively, in the electrical appliance A1 of the present embodiment, one battery or three or more batteries may be used.

The magnet accommodation section 15e of the cover body 15 accommodates the magnet unit 6. The magnet unit 6 includes a yoke (magnet holder) 6a, a magnet 6b, and a magnet cover 6c. The yoke 6a has the shape of a cylinder one end (front end surface) of which is closed. The yoke 6a includes a bottom part 61 which is circular and a peripheral wall 62 extending rearward from the circumferential edge of the bottom part 61. The yoke 6a further has a recess 63 having a columnar shape. The bottom part 61 has a front surface including a boss 64 (see FIG. 7). The boss 64 has a screw hole 65 extending along the forward and rearward direction at the center of the boss 64 (see FIG. 7). The recess 63 has a bottom surface on which the magnet 6b (e.g., neodymium magnet) having a disk shape is disposed. The magnet 6b is sandwiched between the bottom surface of the recess 63 and the magnet cover 6c having a disk shape. The recess 63 has an inner diameter slightly larger than the outer diameter of the magnet 6b. The magnet 6b has a front surface and a side surface facing the yoke 6a and surrounded by the yoke 6a. That is, the magnet 6b is surrounded by the yoke 6a except for the rear surface of the magnet 6b. The magnet cover 6c is an elastic member made of polyester-based elastomer and is fixed to the opening edge of the recess 63 by adhesion. The magnet unit 6 has a rear end surface from which an edge 66 of the peripheral wall 62 of the yoke 6a is annularly exposed. The magnet cover 6c having a disk shape is disposed on the inner circumferential side of the edge 66. Note that the magnet cover 6c is provided to protect the magnet 6b. The magnet cover 6c may be omitted.

As illustrated in FIG. 7, the magnet accommodation section 15e of the cover body 15 has a front surface including a boss 15q. The boss 15q has an end (front end) having a recess 15r. The recess 15r has a bottom surface having a through hole 15j formed along the axial direction of the boss 15q. A screw 101 is screwed into the screw hole 65 of the yoke 6a with the screw 101 inserted through the through hole 15j from the front. The magnet unit 6 is fixed to the magnet accommodation section 15e of the cover body 15 with a tip of the screw 101 touching the front surface of the magnet 6b.

The magnet accommodation section 15e of the cover body 15 has an opening edge 15k covered with the elastic member 15b. The opening edge 15k is formed as a concave surface that is inclined forward and curved inward to the center of the magnet accommodation section 15e. The edge 66 of the peripheral wall 62 of the yoke 6a is also formed as a concave surface that is inclined forward and curved inward to the center of the recess 63. The magnet cover 6c has a rear surface 67 formed as a curved surface. The opening edge 15k, the edge 66 of the peripheral wall 62, and the rear surface 67 (a surface exposed rearward from the magnet accommodation section 15e) of the magnet cover 6c form a recess 8 as one continuous curved surface. The peripheral edge of an inner surface of the recess 8 is the opening edge 15k. That is, the peripheral edge of the inner surface of the recess 8 is provided with the elastic member 15b.

As illustrated in FIG. 7, the case body 11 accommodates the substrate 2, the sensor unit 3, the mirror 4, and the imaging unit 5. As illustrated in FIG. 4, the rear surface of the front wall 11c has a plurality of ribs 11i having a pillar shape. The substrate 2 is disposed in the case body 11 with the front surface of the substrate 2 being in contact with a tip (rear end) of each of the plurality of ribs 11i. As illustrated in FIG. 7, the imaging unit 5 is mounted on the front surface of the substrate 2. The imaging unit 5 can capture an image at the front through the openings 11f and 122 and the light transmissive cover 12b.

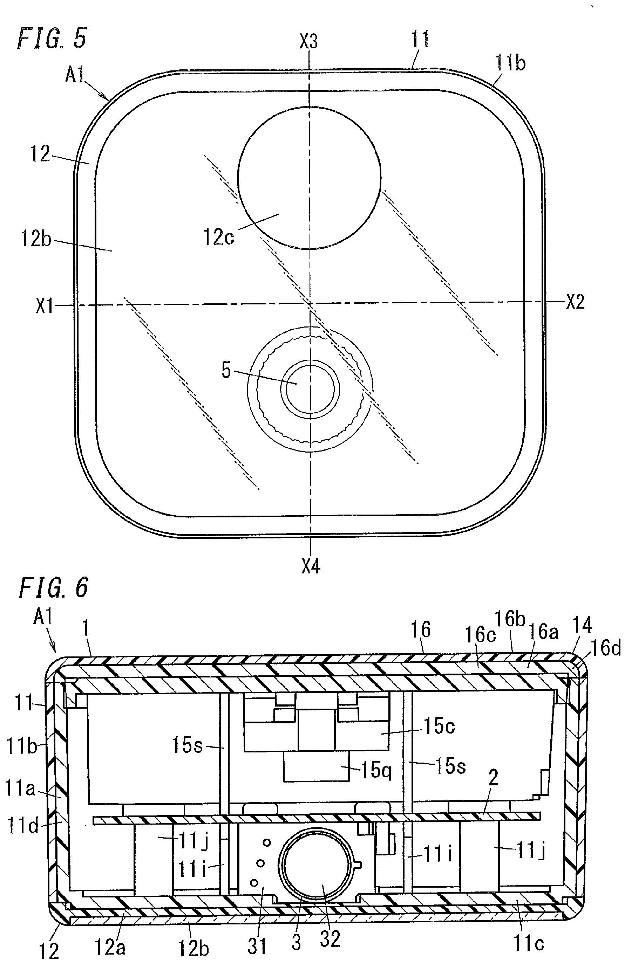

As illustrated in FIG. 6, the rear surface of the front wall 11c is provided with a pair of bosses 11j having a columnar shape. The substrate 2 has holes 2a (see FIG. 4) at locations facing respective tips (rear ends) of the bosses 11j. Surfaces of the tips (rear ends) of the bosses 11j have screw holes along the axial direction. The battery accommodation section 15c of the cover body 15 has a bottom surface having a pair of through holes. Screws 103 inserted from the back through the pair of through holes pass through the pair of holes 2a in the substrate 2 and are screwed into the respective screw holes in the bosses 11j, thereby attaching the cover body 15 to the case body 11.

As illustrated in FIGS. 4 and 6, the front surface of the core member 15a of the cover body 15 is provided with a plurality of ribs 15s having a pillar shape. When the cover body 15 is attached to the rear surface of the case body 11, the substrate 2 is accommodated in the case body 11 with the rear surface of the substrate 2 being in contact with a tip (front end) of each of the plurality of ribs 15s.

Next, the sensor unit 3 and the mirror 4 will be described in detail. The sensor unit 3 includes the infrared sensor 32 which is pyroelectric. The infrared sensor 32 and the mirror 4 are included in the infrared detection device C1 of the present embodiment. As illustrated in FIG. 4, the sensor unit 3 includes a sensor substrate 31 which is rectangular and the infrared sensor 32 mounted on the sensor substrate 31. As illustrated in FIG. 4, the rear surface of the front wall 11c is provided with a pair of clamping pieces 11g which are elastic. The infrared sensor 32 is clamped between the clamping pieces 11g, so that the sensor unit 3 is attached to the case body 11.

As illustrated in FIG. 7, the light receiving surface 32a serving as a detection surface of the infrared sensor 32 is disposed upward to face a lower end of the opening 11e. The rear surface of the front wall 11c includes a rib 11h having a plate shape and having an inclined surface on a rear side of the opening 11e. The rib 11h faces the light receiving surface 32a of the infrared sensor 32 in the upward and downward direction. The mirror 4 is disposed on the inclined surface of the rib 11h. That is, the light receiving surface 32a of the infrared sensor 32 faces the mirror 4. Infrared rays coming through the infrared filter 12c and the openings 121 and 11e are reflected off the mirror 4 and enters the light receiving surface 32a of the infrared sensor 32.

The infrared sensor 32 outputs an electric signal (detection signal) according to the amount of entrance of the infrared rays. The sensor substrate 31 is electrically connected to the substrate 2 via a signal line. Thus, the detection signal of the infrared sensor 32 is input to a control circuit disposed in the substrate 2 via the sensor substrate 31. Based on the detection signal, the control circuit determines the presence or absence of an object (a person 201 (see FIG. 3) in this embodiment). When the presence of the object is determined, data of an image captured by the imaging unit 5 is transmitted by a wireless signal from the wireless communication circuit. Note that the control circuit may be disposed on the sensor substrate 31 of the sensor unit 3.

As illustrated in FIGS. 1 and 2, the mirror 4 includes the plurality of (in this embodiment, eight) reflector mirrors 4a to 4h and the mounting platform 41 having a curved plate shape. The reflector mirrors 4a to 4h are made of, for example, aluminum and are configured to regularly reflect (perform a specular reflection of) most of the infrared rays arriving at the reflector mirrors 4a to 4h. Moreover, the reflector mirrors 4a to 4h are disposed on a surface of the mounting platform 41 which faces the light receiving surface 32a.

In the infrared detection device C1 of the present embodiment, four reflector mirrors 4a to 4d and four reflector mirrors 4e to 4h are disposed on the mounting platform 41 in two rows in the vertical direction in FIG. 1. In the upper row of the mounting platform 41 in FIG. 1, the reflector mirror 4a, the reflector mirror 4b, the reflector mirror 4c, and the reflector mirror 4d are arranged in this order from right to left in FIG. 1. Moreover, in the lower row of the mounting platform 41 in FIG. 1, the reflector mirror 4e, the reflector mirror 4f, the reflector mirror 4g, and the reflector mirror 4h are arranged in this order from right to left in FIG. 1.

As illustrated in FIG. 3, the reflector mirrors 4a to 4h arranged as described above respectively define detection ranges R1 to R8 different from each other in a space (for example, room) 200 in which the infrared detection device C1 of the present embodiment is disposed. That is, the reflector mirror 4a is configured to reflect infrared rays which are incident from a space corresponding to the detection range R1 of the space 200 and to concentrate the infrared rays on the light receiving surface 32a of the infrared sensor 32. In a similar manner, the reflector mirrors 4b to 4h are respectively configured to reflect infrared rays which are incident from spaces corresponding to the detection ranges R2 to R8 of space 200 and to concentrate the infrared rays on the light receiving surface 32a of the infrared sensor 32. The detection ranges R1 to R8 are respectively defined by, for example, the area of the reflector mirrors 4a to 4h, the curvature of the reflector mirrors 4a to 4h, or the arrangement of the reflector mirrors 4a to 4h on the mounting platform 41.

The mounting platform 41 is made of a resin, for example, plastic. As illustrated in FIGS. 1 and 2, the mounting platform 41 includes the separators 41a separating adjacent ones of the reflector mirrors. For example, as illustrated in FIG. 2, a separator 41a is provided between the reflector mirror 4c and the reflector mirror 4d, and a separator 41a is provided between the reflector mirror 4c and the reflector mirror 4g. Moreover, for example, a separator 41a is provided between the reflector mirror 4d and the reflector mirror 4h, and a separator 41a is provided between the reflector mirror 4g and the reflector mirror 4h. That is, the reflector mirrors 4a to 4h are disposed apart from each other on the mounting platform 41.

The mounting platform 41 further includes partitions 411 protruding in the thickness direction of the reflector mirrors 4a to 4h. In the infrared detection device C1 of the present embodiment, the partitions 411 are formed at portions corresponding to the separators 41a integrally with the mounting platform 41. Moreover, the partitions 411 protrude beyond the reflector mirrors 4a to 4h in the thickness direction of the reflector mirrors 4a to 4h. Thus, the reflector mirrors 4a to 4h are separated from each other by the separators 41a (or the partitions 411).

A mirror such as the composite concave mirror described in, for example, Patent Literature 1 (hereinafter referred to as "mirror of a comparative example") includes a plurality of divided mirrors (reflector mirrors) which are composited. Thus, in the infrared detection device including the mirror of the comparative example, it is difficult to determine a reflector mirror defining the detection range from which infrared rays enter the vicinity of the interface between adjacent reflector mirrors. Therefore, in the infrared detection device including the mirror of the comparative example, an object may be falsely detected due to the infrared rays entering the vicinity of the interface between adjacent ones of the reflector mirrors.

In contrast, in the infrared detection device C1 of the present embodiment, as described above, the separators 41a are disposed between adjacent ones of the reflector mirrors. Thus, infrared rays entering the separator 41a are easily absorbed by the mounting platform 41, is less likely to be reflected, and is thus hardly concentrated on the light receiving surface 32a of the infrared sensor 32. That is, in the infrared detection device C1 of the present embodiment, the separators 41a corresponding to the interfaces between adjacent ones of the reflector mirrors are not used as the detection ranges R1 to R8. Thus, the infrared detection device C1 of the present embodiment is less prone to false detection of an object due to the infrared rays entering the vicinity of the interface between adjacent ones of the reflector mirrors than the infrared detection device including the mirror of the comparative example.

Moreover, as described above, in the infrared detection device C1 of the present embodiment, the separators 41a are the partitions 411 protruding in the thickness direction of the reflector mirrors 4a to 4h. Thus, the infrared detection device C1 of the present embodiment provides the advantage that the mirror 4 is easily produced.

An example of a method for producing the mirror 4 of the present embodiment will be described below. First, a mold of the mounting platform 41 is prepared. The mold is at least shaped such that portions to be provided with the plurality of reflector mirrors 4a to 4h are recesses and portions to be provided with the partitions 411 are projections. Thus, the projections of the mold protrude more than the portions where the partitions 411 are to be disposed. Thus, the surfaces of the projections are easily processed and the positions of the reflector mirrors are easily adjusted. The mold is processed into a curved plate-shape by, for example, end-milling. Moreover, the projections of the mold are formed on a paraboloidal surface corresponding to the form, size, and curvature of the reflector mirror by processes using, for example, an end mill.

Next, the surfaces of the projections of the mold are mirror-finished by, for example, a Numeral Control Machine (NC machine). Thus, the surfaces of the projections of the mold have mirror surfaces having a lower surface roughness than the other portions.

A resin (here, plastic) is injection-molded by using the mold to produce the mounting platform 41. In the mounting platform 41 which is produced, portions (i.e., portions to be provided with the reflector mirrors 4a to 4h) facing the projections of the mold have a lower surface roughness than portions (i.e., the partitions 411) facing the recesses of the mold.

Finally, aluminum is vapor-deposited on the mounting platform 41. Thus, the portions of the mounting platform 41 having a low surface roughness are provided with mirror surfaces which will be the reflector mirrors 4a to 4h. On the other hand, the portions of the mounting platform 41 having a high surface roughness are not provided with mirror surfaces and will thus be the partitions 411 which do not serve as reflector mirrors. Here, aluminum is preferably vapor-deposited on all over areas of the mounting platform 41 where the reflector mirrors 4a to 4h and the partition 411 are to be formed, but aluminum may be vapor-deposited on the entirety of the mounting platform 41. The mirror 4 of the present embodiment is thus produced.

Here, for example, production of the mirror of the comparative example requires pieces of molds for each reflector mirror. That is, the plurality of reflector mirrors have different shapes, dimensions, and curvatures. Thus, in the method for producing the mirror of the comparative example, a plurality of molds having paraboloidal surfaces with different curvatures are prepared. Then, a plurality of mold pieces are cut from the molds in accordance with the shapes and sizes of the reflector mirrors. These mold pieces which are cut are accurately combined to form a mold by using which injection molding is performed to obtain a molded product, on which aluminum is vapor-deposited. The mirror of the comparative example is thus produced. This method requires a mold for each reflector mirror, which complicates the production steps. Moreover, this method increases cost required for the molds, leading to an increase in production cost of the mirror.

In contrast, in the infrared detection device C1 of the present embodiment, the mounting platform 41 of the mirror 4 has the partitions 411, and thus, it is possible to produce the mirror 4 from one mold. Thus, in the infrared detection device C1 of the present embodiment, the manufacturing efficiency of the mirror 4 can be increased more than that of the mirror of the comparative example, and the production cost of the mirror 4 can be reduced more than that of the mirror of the comparative example.

Moreover, in the infrared detection device C1 of the present embodiment, it is possible to produce the mirror 4 from one mold, and thus combining a plurality of molds as in the case of the comparative example mirror is not necessary. Thus, in the infrared detection device C1 of the present embodiment, positional displacement of the plurality of reflector mirrors 4a to 4h due to misalignment of the molds is not caused during the production of the mirror 4, and thus, it is possible to increase the accuracy of definition of the detection ranges R1 to R8.

Moreover, in the infrared detection device C1 of the present embodiment, the mold of the mounting platform 41 is easily produced, and thus, the infrared detection device C1 is easily adapted to products varying in the number, shape, size, and curvature of the reflector mirrors of the mirror 4. Note that providing the partition 411 to the mounting platform 41 of the mirror 4 is optional.

Moreover, in the infrared detection device C1 of the present embodiment, the separators 41a are preferably configured to diffuse and reflect infrared rays. With this configuration, the infrared rays entering the portion where the reflector mirrors 4a to 4h are not formed are not absorbed by the mounting platform 41 and are diffused and reflected, and therefore, the mounting platform 41 hardly deforms. Thus, this configuration is not likely to lead to optical positional displacement of the reflector mirrors 4a to 4h due to the deformation of the mounting platform 41.

This configuration is realizable by vapor-depositing aluminum on the separators 41a (partitions 411) in the method for producing the above-described mirror 4. That is, the separators 41a (partitions 411) have a higher surface roughness than the portions where the reflector mirrors 4a to 4h are disposed. Thus, vapor deposition of aluminum on the separators 41a (partitions 411) forms surfaces which diffuse and reflect infrared rays, but not mirror surfaces as the reflector mirrors 4a to 4h. Note that it is optional whether or not this configuration is adopted.

The infrared detection device C1 of the present embodiment includes eight reflector mirrors 4a to 4h, but the present embodiment does not intend to limit the number of the reflector mirrors. That is, the infrared detection device C1 includes at least two or more reflector mirrors depending on the number of the detection ranges to be defined. Moreover, in the infrared detection device C1 of the present embodiment, the reflector mirrors 4a to 4h are made of aluminum but may be made of, for example, chrome. In this case, during the production of the mirror 4, plating the mounting platform 41 with chrome may be preformed instead of vapor deposition of aluminum.

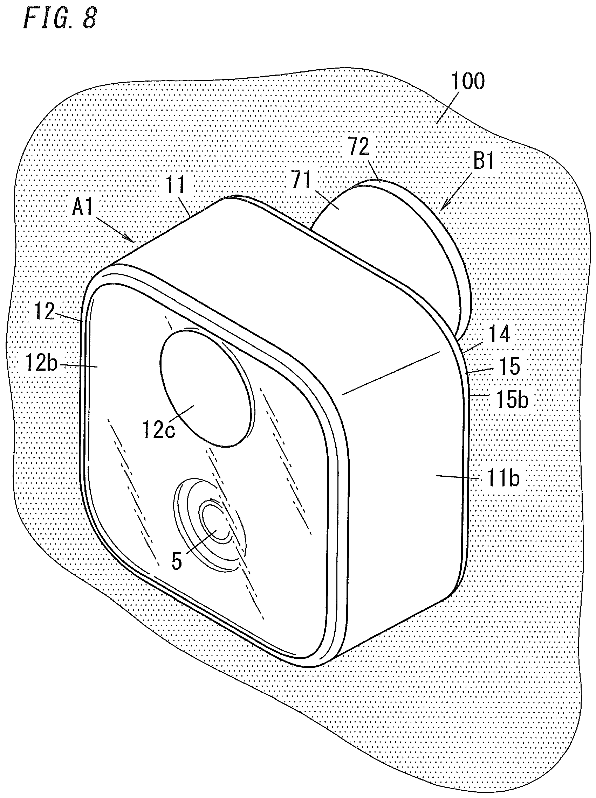

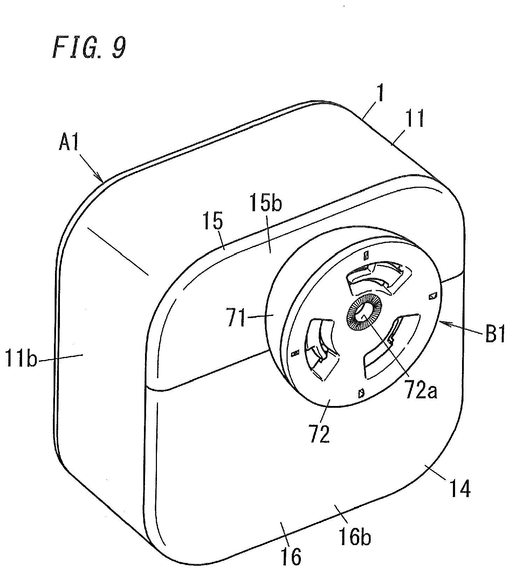

As illustrated in FIGS. 8 and 9, the electrical appliance A1 of the present embodiment is configured to be detachably held by a holder member B1. The holder member B1 will be described below. The holder member B1 has a hollow hemispherical shape and includes a connector 71 which is hemispherical and a base 72 which is disk-shaped.

The connector 71 has a hemispherical cup shape and is made of iron. The connector 71 is required only to have magnetism (preferably ferromagnetism) and may be made of a magnetic body other than iron. The base 72 has a through hole 72a at a location deviated from the center of the base 72. A screw is inserted from the front through the through hole 72a, and the screw is screwed into a structure surface 100 such as a wall surface, thereby fixing the base 72 to the structure surface 100.

The connector 71 has a structure which is to be detachably attached to the base 72. That is, the connector 71 and the base 72 include engaging sections which engage with each other. The connector 71 in the first direction (in this embodiment, clockwise) is rotated with the connector 71 being in contact with the base 72 fixed to the structure surface 100, thereby causing the engaging section of the connector 71 to engage with the engaging section of the base 72 so as to attach the connector 71 to the base 72. In contrast, rotating the connector 71 in the second direction (in this embodiment, anticlockwise) releases the engagement between the connector 71 and the base 72 to detach the connector 71 from the base 72.

Next, a holding structure of holding the electrical appliance A1 of the present embodiment by the holder member B1 will be described. In this embodiment, it is assumed that the base 72 is fixed to the structure surface 100. Moreover, in this embodiment, it is assumed that the connector 71 is attached to the base 72.

When the recess 8 (see FIG. 7) formed in the rear surface of the housing 1 of the electrical appliance A1 is brought close to the connector 71 of the holder member B1, the housing 1 is attracted to the connector 71 having magnetism due to the magnetic force of the magnet unit 6, and the recess 8 comes into contact with the connector 71. Hereafter, the housing 1 is held by the connector 71 having magnetism due to the magnetic force of the magnet unit 6. When the image capturing direction of the imaging unit 5 of the electrical appliance A1 or the detection direction of the infrared sensor 32 is changed, a user applies rotational force to the housing 1 with the housing 1 being held by the holder member B1. Thus, the housing 1 rotates with the recess 8 being in contact with the connector 71, which enables adjustment of the attachment direction of the housing 1 with respect to the structure surface 100.

Thus, in the electrical appliance A1 of the present embodiment, the housing 1 is held by the holder member B1 due to the magnetic force, and therefore, complicated processes are not required to adjust the attachment direction of the housing 1, and the attachment direction of the housing 1 with respect to the structure surface 100 can be easily adjusted.

The electrical appliance A1 of the present embodiment includes the imaging unit 5, but providing the imaging unit 5 is optional. That is, as long as the electrical appliance A1 includes the infrared detection device C1 and has a function of detecting an object, the electrical appliance A1 may have another configuration.

As can be clearly seen from the above-described embodiment, the infrared detection device (C1) according to a first aspect of the present invention includes an infrared sensor (32) and a mirror (4). The infrared sensor (32) is configured to receive infrared rays. The mirror (4) is configured to concentrate the infrared rays on a light receiving surface (32a) of the infrared sensor (32). The mirror (4) includes a plurality of reflector mirrors (4a to 4h) and a mounting platform (41). The plurality of reflector mirrors (4a to 4h) respectively define detection ranges (R1 to R8) different from each other. The plurality of reflector mirrors (4a to 4h) are disposed on the mounting platform (41). The mounting platform (41) includes separators (41a) separating adjacent ones of the plurality of reflector mirrors (4a to 4h).

In an infrared detection device (C1) according to a second aspect of the present invention referring to the first aspect, the separators (41a) are partitions (411) protruding in a thickness direction of the reflector mirrors (4a to 4h).

In an infrared detection device (C1) according to a third aspect of the present invention referring to the first or second aspect, the separators (41a) are configured to diffuse or reflect the infrared rays.

In an infrared detection device (C1) according to a fourth aspect of the present invention referring to the third aspect, portions of the mounting platform (41) where the separators (41a) are formed have a higher surface roughness than portions of the mounting platform (41) where the reflector mirrors (4a to 4h) are disposed.

The infrared detection device (C1) is less prone to false detection of an object.

### Reference Signs List

- 32: Infrared Sensor
- 32a: Light Receiving Surface
- 4: Mirror
- 4a to 4h: Reflector Mirror
- 41: Mounting Platform
- 41a: Separator
- 411: Partition
- C1: Infrared Detection Device

## Claims

1. An infrared detection device, comprising:
an infrared sensor configured to receive infrared rays; and
a mirror configured to concentrate the infrared rays on a light receiving surface of the infrared sensor,
the mirror including
a plurality of reflector mirrors defining respective detection ranges different from each other and
a mounting platform on which the plurality of reflector mirrors are disposed,
the mounting platform including a separator separating adjacent ones of the plurality of reflector mirrors.

2. The infrared detection device according to claim 1, wherein
the separator is a partition protruding in a thickness direction of the plurality of reflector mirrors.

3. The infrared detection device according to claim 1 or 2, wherein
the separator is configured to diffuse and reflect the infrared rays.

4. The infrared detection device according to claim 3, wherein
a portion of the mounting platform where the separator is formed has a higher surface roughness than portions of the mounting platform where the plurality of reflector mirrors are disposed.
